Europäisches Patentamt

European Patent Office

Office européen des brevets

(11) Publication number: **0 396 097 A2**

# EUROPEAN PATENT APPLICATION

(21) Application number: **90108258.6**

(51) Int. Cl.⁵: **G06F 3/06**

(22) Date of filing: **30.04.90**

(30) Priority: **02.05.89 JP 113304/89**

(43) Date of publication of application:
**07.11.90 Bulletin 90/45**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken 210(JP)**

(72) Inventor: **Nakazoe, Masayo, c/o Intellectual**
**Property**
**Division - K. K. Toshiba 1-1 Shibaura**
**1-chome**
**Minato-ku, Tokyo 105(JP)**

(74) Representative: **Henkel, Feiler, Hänzel &**
**Partner**
**Möhlstrasse 37**
**D-8000 München 80(DE)**

(54) Method and apparatus for automatically setting the type of hard-disc drive.

(57) A CPU 1, responding to a key input from a keyboard, issues a parameter read-in command to an HDC (15). Upon receiving the parameter read-in command, the HDC (15) reads out from a predetermined sector of an HDD (17) parameters of the HDD (17) such as the number of heads, the number of cylinders and the number of sectors per track. The read-out parameters are set in a sector buffer (15a), and the CPU 1 is interrupted. In response to the interrupt signal, the CPU 1 reads the parameters from the HDC (15) and stores them in a battery backup memory. In addition, the CPU 1 discriminates the type of the HDD (15) on the basis of the parameters and enables a display (29) to display the discriminated type and the parameters of the HDD (15).

F I G. 1

EP 0 396 097 A2

# Method and apparatus for automatically setting the type of hard-disc drive

The present invention relates to a method and an apparatus for automatically setting the type of a hard-disc drive ("HDD" hereinafter), in determining a system configuration, for example, of a personal computer or the like.

Lap-top type personal computers have recently been displacing conventional desk-top type personal computers. A lap-top type personal computer is small in size, light in weight, and portable. Some lap-top type personal computers are equivalent in performance to desk-top personal computers. Namely, such lap-top computers have, as external memory devices, not only floppy-disc drives but also HDDs. The HDDs vary in memory capacity and, for instance, some have a 20 MB (megabytes) memory capacity, and others have a 40 MB memory capacity. For instance, personal computers of the same type include ones with 20 MB hard-disc drives and ones with 40 MB hard-disc drives.

If HDDs differ in memory capacity, they also differ in parameters such as the number of cylinders, the number of sectors, and the number of heads. There may be HDDs having the same memory capacity but having the different numbers of cylinders, sectors and heads. For example, the number of heads may be doubled while the number of cylinders may be reduced accordingly, or vice versa.

The above-type personal computer is so designed that a user can freely connect an external HDD to the computer. In order to control various types of HDDs, a computer system needs to recognize the parameters of HDDs, such as the number of cylinders, the number of sectors, and the number of heads. Conventionally, the types of HDDs supported by a system are shown on a display, and the user, while watching the display, inputs the data relating to the type of the HDD to be used, so that the system can recognize the type of the HDD. In this case, however, if the user fails to input the data correctly, the HDD is not suitably set. This procedure is troublesome to the user, and there is an eager expectancy for the advent of the technique for automatically setting the parameters of the HDD types.

The object of the present invention is to provide an apparatus and a method of automatically setting a hard-disc drive, wherein when a non-standard HDD is connected, the type of the HDD is automatically determined, and necessary parameters of the HDD are stored in a predetermined area of a memory and displayed on a display, so that a user can confirm the parameters.

According to a first aspect of this invention, there is provided an apparatus for automatically setting the parameters of a hard-disc drive connected internally or externally to a personal computer, comprising: input means for inputting a command for automatically setting the parameters of the hard-disc drive; parameter read-out means for reading out the parameters from the hard-disc drive, in response to the command input from said input means; type discrimination means for discriminating the type of the hard-disc drive, on the basis of the parameters read out from said parameter read-out means; storage means for storing the parameters read out by the parameter read-out means, and type information obtained by said type discrimination means; and display means for displaying the contents of said storage means.

According to a second aspect of the invention, there is provided an apparatus for automatically setting the parameters of a hard-disc drive connected internally or externally to a personal computer, comprising: first storage means for storing a first program, actuated upon power "ON" of the personal computer, for reading the parameters of the hard-disc apparatus and a second program for setting up the personal computer; second storage means for storing, when the hard-disc drive is changed, the parameter of the new hard-disc drive; comparison means for comparing the parameters of the hard-disc drive read by said first program with the parameters stored in the second storage means, and outputting a non-coincidence signal when these parameters differ from each other; display means for displaying an error message to the effect that the parameters of the hard-disc drive differ from the registered parameters, in response to the non-coincidence signal from the comparison means; input means for inputting a command to execute the second program, in response to the error message; and means for executing the second program in response to the command from the input means, discriminating the type of the hard-disc drive on the basis of the parameters of the hard-disc drive read by the first program, and enables said display means to display said parameters and type of the hard-disc drive.

According to a third aspect of the invention, there is provided an apparatus for automatically setting the parameters of a hard-disc drive connected internally or externally to a personal computer, comprising: first storage means for storing a program, actuated upon power "ON" of the personal computer, for reading the parameters of the hard-disc apparatus; second storage means for storing, when the hard-disc drive is changed, the parameter of the new hard-disc drive; comparison means for comparing the parameters of the hard-disc drive actuated by said program with the parameters stored in the second storage means, and outputting a non-coincidence signal when these parameters differ from each other; type discrimination means for discriminating the type of the hard disc apparatus, on the basis of the parameters of the hard-disc drive read by said program; and display means for displaying the parameters and the type of the hard-disc drive read out by said program, in response to the non-coincidence signal from the comparison means.

When an HDD, other than a default HDD type, is employed, a system setup program is activated upon the depression of a specific key. A command is issued to the HDD, and parameters (the number of heads, the number of cylinders, and the number of sectors per track) of the HDD are read out. Based on the read-out parameters, the type of the currently connected HDD is discriminated and the data relating the discriminated type is stored in a battery backup memory. Thus, unlike in conventional art, a user need not judge or set the type of the HDD. While the user is made free from troublesome procedures, malfunction due to the user can be prevented.

This invention can be more fully understood from the following detailed description when taken in conjunction with the accompanying drawings, in which:

Fig. 1 is a block diagram showing a first embodiment of an HDD type automatic-setting system according to the present invention;

Fig. 2 is a flowchart for illustrating the routine of HDD automatic discriminating/setting processing, which is part of the BIOS stored in the ROM 3;

Fig. 3 is a flowchart for illustrating reboot processing;

Fig. 4 is a flowchart for illustrating the operation of a second embodiment of the invention;

Fig. 5 is a view for explaining an example of parameters and type of the HDD, displayed on a display;

Fig. 6 is a view for explaining mode display and mode selection of the HDD; and

Fig. 7 is a flowchart for illustrating the operation of a third embodiment of the invention.

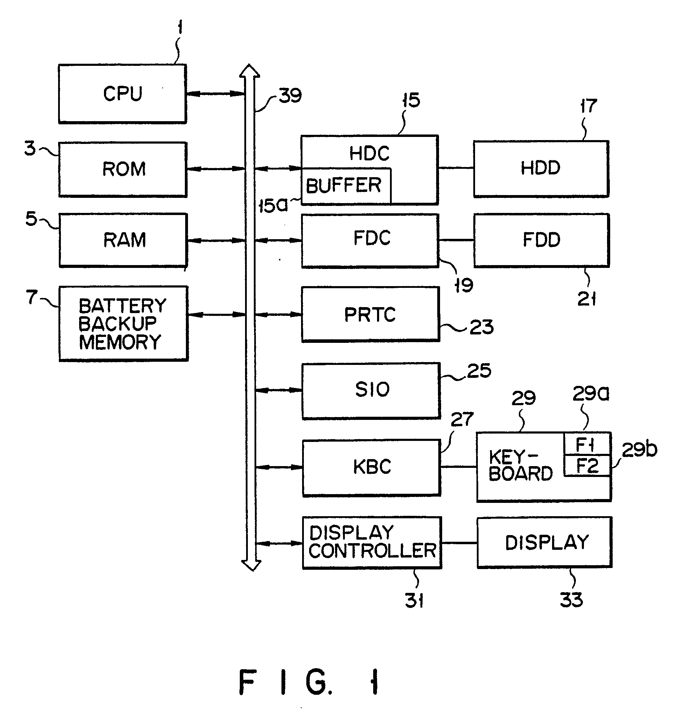

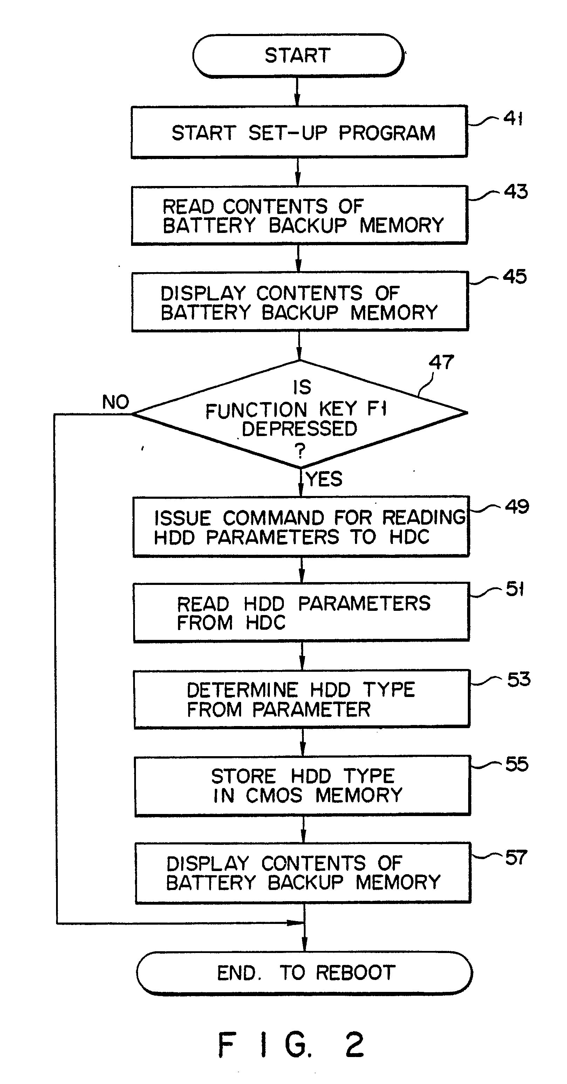

Fig. 1 is a block diagram showing a first embodiment of an HDD type automatic-setting system according to the present invention. In Fig. 1, a CPU (Central Processing Unit) controls the entire operation of the system. The CPU 1 sends an HDD parameter read-out command to an HDC (Hard-Disc Controller) 15 (described later), and reads out HDD parameters. The CPU 1 stores the read-out parameters into a battery backup memory 7 (described later). A ROM (Read-Only Memory) 3 stores a basic input/output operating system (BIOS) program. The BIOS includes programs illustrated in the flowcharts of Figs. 2, 3, 4, and 7. A RAM (Random Access Memory) 5 stores an application program to be executed in the personal computer and various data. The contents of the battery backup memory 7 are not erased even when the power is turned off.

The hard-disc controller (HDC) 15 comprises a commercially available LSI for controlling a hard-disc drive (HDD) 17. The HDC 15 includes a buffer 15a for storing parameters read out from the HDD 17. In other words, the HDC 15 reads out parameters stored in advance in predetermined sectors of the HDD 17, for example, the number of cylinders, the number of heads, and the number of sectors per track. The read-out parameters are set in the buffer 15a. The HDD 17 is an external memory device for storing programs and data.

An FDC (Floppy Disc Controller) 19 comprises a commercially available LSI for controlling an FDD (Floppy Disc Drive) 21. Like the HDD 17, the FDD 21 is an external memory device for storing programs and data. A PRTC (Printer Controller) 23 controls a printer. An SIO (Serial Input/Output Control Circuit) 25 comprises a commercially available LSI for controlling communications. A KBC (Keyboard Controller) 27 comprises a commercially available LSI for controlling a keyboard 29. The keyboard 29 has a function key (F1) 29a for automatically setting the type of the HDD, and a function key (F2) 29b for starting a setup operation. A display controller 31 controls a display unit 33. The ROM 3, RAM 5, battery backup memory 7, HDC 15, FDC 19, PRTC 23, SIO 25, KBC 27, and display controller 31 are connected to the CPU 1 through a system bus 39.

Fig. 2 is a flowchart for illustrating the routine of HDD automatic discriminating/setting processing, which is part of the BIOS stored in the ROM 3.

The operation of the first embodiment of the invention will now be described with reference to the flowchart of Fig.2.

When power is turned on, the CPU 1 starts a set-up program. In step 43, the CPU 1 reads the contents of the battery backup memory 7. The battery backup memory 7 initially stores a default value. Namely, the memory 7 stores parameters of a standard HDD connected to the personal computer. When the HDD is changed, the parameters of the new one are set. In step 45, the CPU 1 displays the contents of the battery backup memory 7 on the display 33. Then, the CPU 1 waits an entry of the function key being depressed by a user. The user checks the parameters of the HDD 17 shown on the display 33, and when he judges that the displayed parameters are not those of the new HDD, he depresses the function key.

Responding to the depression of the function key 29a, the CPU 1 issues to the HDC 15 a command for reading out the parameters of the HDD 17 (step 49). The HDC 15, in response to the command sent from the CPU 1, reads out the parameters (i.e. the number of heads, the number of cylinders, the number of sectors per track, and the like) of the HDD 17 stored in predetermined sectors of the HDD 17 and sets the read-out parameters in the buffer 15a. The HDC 15 outputs an interrupt signal to the CPU 1. Responding to the interrupt signal, the CPU 1 reads out the parameters of the HDD 17 set in the buffer 15a (step 51). In step 53, the type (e.g. 20 MB, or 40 MB) of the HDD 17 is determined from the read-out parameters. The determination of the type is effected by calculating the memory capacity of the HDD from the number of heads, the number of cylinders, and the number of sectors per track. The CPU 1 stores the determined type along with the parameters in predetermined area in the battery backup memory 7. In step 57, the CPU 1 causes the contents of the battery backup memory 7 to be displayed on the display 33.

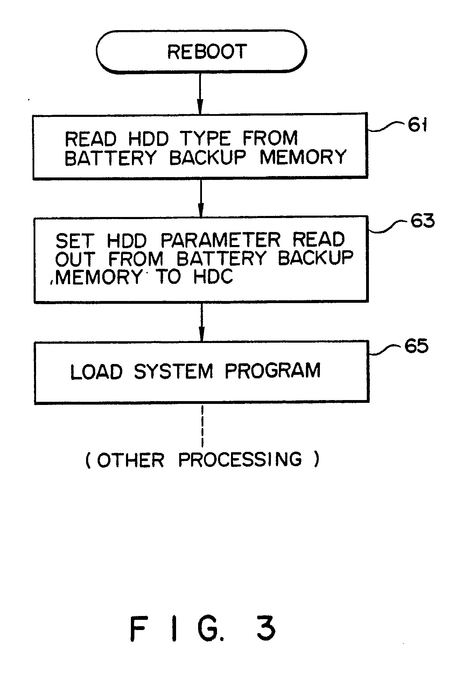

Subsequently, the user starts the reboot processing, as illustrated in Fig. 3. First, the user depresses a system reset key (not shown). Responding to the depression of the system reset key, the CPU 1 reads out the data relating to the HDD type and the parameters from the battery backup memory 7 (step 61). Next, in step 63, the CPU 1 sets the parameters of the HDD 17 read out from the battery backup memory 7 into the HDC 15 (step 63). Then, the CPU 1 loads the system program in step 65 and prosecutes the subsequent processing.

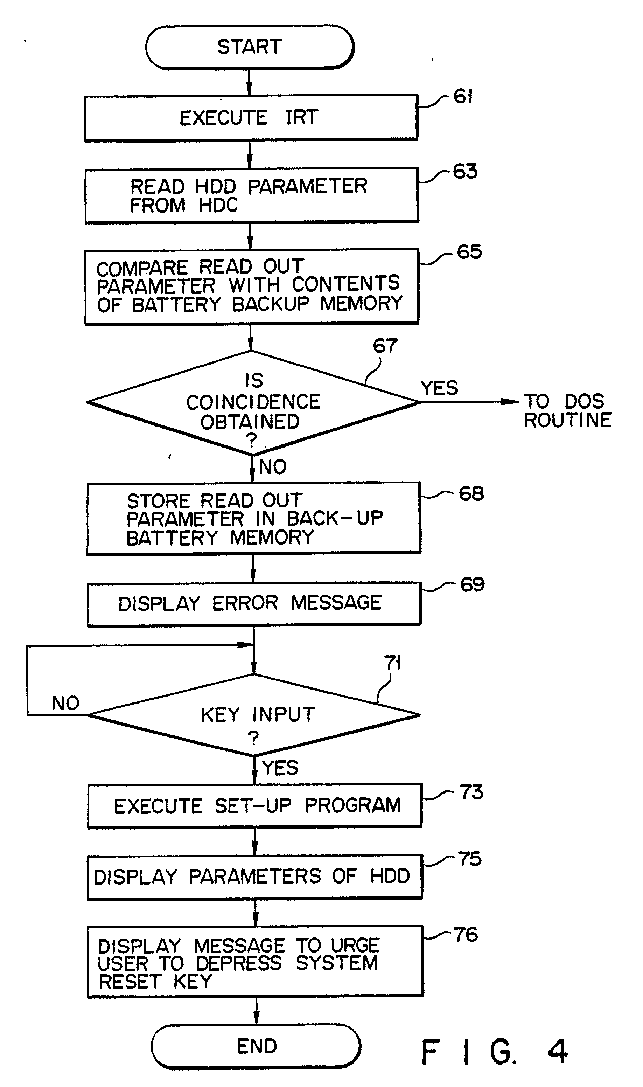

Fig. 4 is a flowchart showing a second embodiment of the present invention.

In the first embodiment shown in Fig. 2, the CPU 1 determined the type of the HDD in response to the depression of the function key. In the embodiment shown in Fig. 4, however, an IRT (Initial Reliability Test) routine included in the BIOS is carried out when the power is turned on, thereby determining the type of the HDD. Namely, in step 61 shown in Fig. 4, the IRT is executed. In the subsequent step 63, the CPU 1 issues to the HDC 15 a command for reading the parameters of the HDD 17, and reads out the parameters of the HDD 17 from the HDC 15. In step 65, the CPU 1 compares the parameters read out in step 63 with those of the previous HDD 17 stored in the battery backup memory 7. If these parameters coincide, the control goes to a DOS (Disc Operating System Program) routine (step 67).

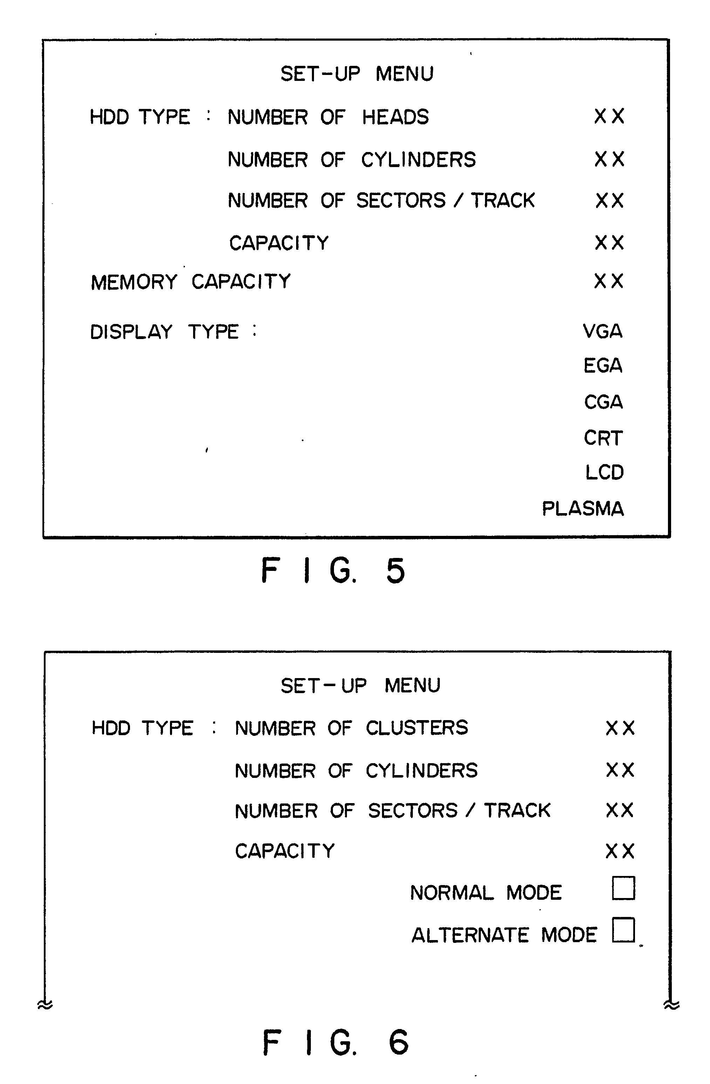

If the parameters do not coincide in step 67, the CPU 1 stores the read-out parameters of the HDD 17 into the battery backup memory 7 (step 68). In step 69, the CPU 1 shows an error message, e.g. "HDD type is incorrect", on the display 33, and simultaneously the CPU 1 shows a message "Start set-up operation" on the display 33. In response, the user depresses the function key (F2) 29b. When the CPU 1 detects the depression of the function key (F2) 29b in step 71, it executes a set-up program included in the BIOS in step 73. In step 75, the parameters of the HDD 17 are shown on the display 33. An example of a display screen at this time is shown in Fig. 5. As shown in Fig. 5, the display screen shows the number of heads, the number of cylinders, the number of sectors per track, and the capacity, as well as the main memory capacity and the display type.

When necessary, as shown in Fig. 6, "normal mode" and "alternate mode" are displayed. In this case, the HDDs having the same capacity may have "normal mode" and "alternate mode". While seeing the screen as shown in Fig. 6, the user selects the desired mode by moving the cursor to a relevant location, for example, by means of a keyboard. In the normal mode, the number of sectors per track is set to 34, whereas in the alternate mode the number of sectors per track is emulated as if it mere 17. Namely, in the alternate mode, though the number of sectors is physically 34, this number is supposed to be 17. The reason for this is that, when an old type hard-disc drive having physically only 17 sectors per track is employed, there is a need to establish compatibility with an application program designed for such an old hard-disc drive. Since there are HDDs having the above two modes and not having them, the mode display and mode selection are performed on as-needed basis, using the screen as shown in Fig.6. In step 76, the CPU 1 causes a message to be displayed to urge the user to depress the system reset key (not shown), in order to start the reboot processing as illustrated in Fig. 3.

With the above structure, any problem will be prevented from occurring, which may occur when the user fails to depress the function key (F1) 29a for resetting the parameters of the HDD, although the user has changed the HDD.

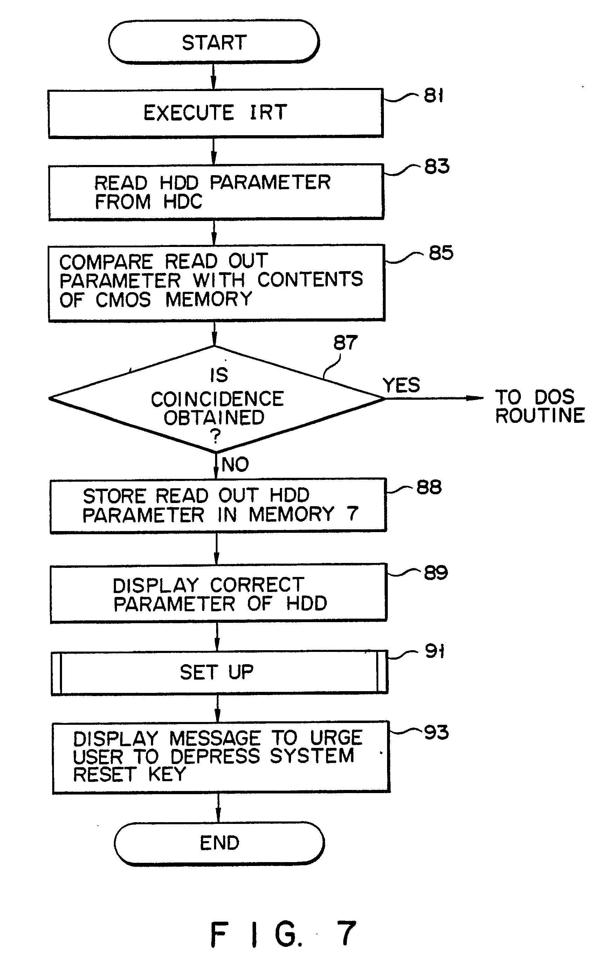

Fig. 7 shows a third embodiment of the present invention. In step 81, the CPU 1 executes the IRT. In step 83, the CPU 1 issues a command to the HDC 15, as in step 63 shown in Fig. 4, to read parameters of the HDD 17 from the HDC 15. In step 85, the read-out parameters of the HDD 17 are compared with those of the previous HDD stored in the backup memory 7. In step 87, it is determined whether these parameters coincide or not. If they do not coincide, the CPU 1 stores the parameters of the HDD 17 read out in step 88 into the backup memory 7. Then, in step 89, the CPU 1 operates the display 33 to show the parameters of the HDD current connected, thereby informing the user of the fact that the parameters of the HDD 17 are incorrect. In step 91, the CPU 1 calls a set-up routine in the BIOS, and executes the set-up operation. In step 93, the CPU 1 enables the display to show a message for urging the user to depress the system reset key, so that the reboot processing as illustrated in Fig. 3 can be started.

The present invention is not limited to the above-described embodiments.

For instance, there are keyboards having 101 keys and 102 keys. These different types of keyboards can be automatically discriminated.

In the flowchart shown in Fig. 4, when the parameters do not coincide, it is possible to enable the display to first display an error message and then display the HDD type in response to the depression of a predetermined key.

The keyboard, employed as input means, may be replaced with a mouse, a light pen, a touch panel, etc.

## Claims

1. An apparatus for automatically setting the parameters of a hard-disc drive in a personal computer including an internally or externally connected hard-disc drive, a battery backup memory for storing the parameters of the hard-disc drive, a display, and an input device including a keyboard, characterized in that there are provided:
read-in means (1, 3, 7) for reading parameters from the hard-disc drive into the backup memory; and
type discrimination means (1, 3) for discriminating the type of the hard-disc drive on the basis of the read-in parameters.

2. The apparatus according to claim 1, characterized by further comprising display means (1, 33) for enabling said display to display the discriminated and the parameters of the hard-disc drive.

3. The apparatus according to claim 1, characterized in that said read-in means reads the parameters from the hard-disc drive into the backup memory, in response to a predetermined key input from the keyboard.

4. The apparatus according to claim 1, characterized in that said read-in means reads the parameters from the hard-disc drive in the backup memory, in response to the power "ON" of the personal computer.

5. The apparatus according to claim 1, further comprising:
comparison means (1, 3) for comparing the parameters of the hard-disc drive read by said read-in means with the parameters of the hard-disc drive previously stored in the battery backup memory, and outputting a non-coincidence signal when the comparison result is non-coincidence;

display means (1, 3) for displaying, responding to the non-coincidence signal from the comparison means, an error message to the effect that the parameters of the hard-disc drive differ from the registered parameters; and
means (1, 3) for executing a system setup program in response to a command from said input device, and for discriminating the type of the hard-disc drive on the basis of the read parameters of the hard-disc drive.

6. The apparatus according to claim 5, characterized in that said executing means includes means for enabling the display to display the discriminated type and the parameters.

7. The apparatus according to claim 1, further comprising:
comparison means (1, 3) for comparing the parameters of the hard-disc drive read by said read-in means with the parameters of the hard-disc drive previously stored in the battery backup memory, and outputting a non-coincidence signal when the comparison result is non-coincidence; and
means (1, 3) for discriminating, responding to the non-coincidence signal from the comparison means, the type of the hard-disc drive on the basis of the parameters read from the hard-disc drive.

8. The apparatus according to claim 7, characterized in that said discriminating means includes means for enabling the display to display the discriminated type and the parameters.

9. The apparatus according to claim 1, characterized in that said parameters include the number of heads of the hard-disc apparatus, the number of cylinders of the hard-disc apparatus, and the number of sectors per track of the hard-disc apparatus.

10. The apparatus according to claim 1, characterized in that said means (1, 3) for enabling the display to display the discriminated type and the parameter enables the display to further display a plurality of modes of the hard-disc drive which differ depending on application programs, and wherein there is provided means (1, 3, 29) for selecting one of the modes which corresponds to an application program to be used.

11. A method for automatically setting the parameters of a hard-disc drive in a personal computer including an internally or externally connected hard-disc drive, a battery backup memory for storing the parameters of the hard-disc drive, a display, and an input device including a keyboard, characterized by comprising the computer steps of:
reading parameters from the hard-disc drive into the backup memory; and
discriminating the type of the hard-disc drive on the basis of the read-in parameters.

12. The method according to claim 11, characterized by further comprising displaying the discriminated type and the parameters of the hard-disc drive on the display.

13. The method according to claim 11, characterized in that in said reading step the parameters are read from the hard-disc drive, in response to a predetermined key input from the keyboard.

14. The method according to claim 11, characterized in that in said reading step the parameters are read from the hard-disc drive upon the power "ON" of the personal computer.

15. The method according to claim 11, further comprising the steps of:
comparing the parameters of the hard-disc drive read in said reading step with the parameters of the hard-disc drive previously stored in the battery backup memory, and outputting a non-coincidence signal when the comparison result is non-coincidence;
displaying, when non-coincidence signal is issued in the comparing step, an error message to the effect that the parameters of the hard-disc drive differ from the registered parameters; and
executing a system setup program in response to a command from said keyboard, and for discriminating the type of the hard-disc drive on the basis of the read parameters of the hard-disc drive.

16. The method according to claim 15, characterized by further comprising enabling the display to display the discriminated type and the parameters.

17. The method according to claim 11, further comprising the steps of:
comparing the parameters of the hard-disc drive read in the reading step with the parameters of the hard-disc drive previously stored in the battery backup memory, and outputting a non-coincidence signal when the comparison result is non-coincidence; and
discriminating, when non-coincidence is detected in the comparing step, the type of the hard-disc drive on the basis of the parameters read from the hard-disc drive.

18. The method according to claim 17, characterized by further comprising enabling the display to display the discriminated type and the parameters.

19. The method according to claim 11, characterized in that said parameters include the number of heads of the hard-disc apparatus, the number of cylinders of the hard-disc apparatus, and the number of sectors per track of the hard-disc apparatus.

20. The method according to claim 11, characterized in that said step of enabling the display to display the discriminated type and the parameter further enables the display to display a plurality of modes of the hard-disc drive which differ depending on application programs, and wherein there is provided a step of selecting one of the modes which corresponds to an application program to be used.

21. An apparatus for automatically discriminating the types of two or more keyboards which can be connected to a personal computer, comprising:
input means (29) for inputting a command to automatically discriminating the parameters of the keyboards;
parameter read-out means (1, 3) for reading out the parameters of the keyboards, in response to the command input from the input means (29);
type discrimination means (1, 3) for discriminating the types of the keyboards, on the basis of the parameters read out from said parameter read-out means; and
storage means (7) for storing the parameters read out by said parameter read-out means and type information obtained by said type discrimination means.

22. The apparatus according to claim 21, characterized by further comprising display means (33) for displaying the contents of said storage means.

F I G. 1

EP 0 396 097 A2

```
                    ┌─────────────────┐
                    │      START      │
                    └─────────────────┘
                             │
            ┌────────────────────────────────┐   ～41
            │      START SET-UP PROGRAM      │
            └────────────────────────────────┘
                             │
            ┌────────────────────────────────┐   ～43
            │      READ CONTENTS OF          │
            │    BATTERY BACKUP MEMORY       │
            └────────────────────────────────┘
                             │
            ┌────────────────────────────────┐   ～45
            │     DISPLAY CONTENTS OF        │
            │    BATTERY BACKUP MEMORY       │
            └────────────────────────────────┘
                             │
                          ╱──────╲              47
                        ╱    IS    ╲    ╱
              NO      ╱  FUNCTION KEY F1 ╲
            ◄────────◄    DEPRESSED       ►
                        ╲      ?        ╱
                          ╲──────╱
                             │YES
            ┌────────────────────────────────┐   ～49
            │  ISSUE COMMAND FOR READING     │
            │  HDD PARAMETERS TO HDC         │
            └────────────────────────────────┘
                             │
            ┌────────────────────────────────┐   ～51
            │    READ HDD PARAMETERS         │
            │    FROM HDC                    │
            └────────────────────────────────┘
                             │
            ┌────────────────────────────────┐   ～53
            │   DETERMINE HDD TYPE           │
            │   FROM PARAMETER               │
            └────────────────────────────────┘
                             │
            ┌────────────────────────────────┐   ～55
            │    STORE HDD TYPE              │
            │    IN CMOS MEMORY              │
            └────────────────────────────────┘
                             │
            ┌────────────────────────────────┐   ～57
            │    DISPLAY CONTENTS OF         │
            │   BATTERY BACKUP MEMORY        │
            └────────────────────────────────┘
                             │
                    ┌─────────────────┐
                    │  END. TO REBOOT │
                    └─────────────────┘
```

F I G.  2

REBOOT

READ HDD TYPE FROM
BATTERY BACKUP MEMORY — 61

SET HDD PARAMETER READ
OUT FROM BATTERY BACKUP
,MEMORY· TO HDC — 63

LOAD SYSTEM PROGRAM — 65

( OTHER PROCESSING )

F I G. 3

START

EXECUTE IRT — 61

READ HDD PARAMETER FROM HDC — 63

COMPARE READ OUT PARAMETER WITH CONTENTS OF BATTERY BACKUP MEMORY — 65

IS COINCIDENCE OBTAINED ? — 67

YES → TO DOS ROUTINE

NO

STORE READ OUT PARAMETER IN BACK-UP BATTERY MEMORY — 68

DISPLAY ERROR MESSAGE — 69

KEY INPUT ? — 71

NO

YES

EXECUTE SET-UP PROGRAM — 73

DISPLAY PARAMETERS OF HDD — 75

DISPLAY MESSAGE TO URGE USER TO DEPRESS SYSTEM RESET KEY — 76

END

F I G. 4

SET-UP MENU

HDD TYPE : NUMBER OF HEADS XX

NUMBER OF CYLINDERS XX

NUMBER OF SECTORS / TRACK XX

CAPACITY XX

MEMORY CAPACITY XX

DISPLAY TYPE : VGA

EGA

CGA

CRT

LCD

PLASMA

F I G. 5

SET-UP MENU

HDD TYPE : NUMBER OF CLUSTERS XX

NUMBER OF CYLINDERS XX

NUMBER OF SECTORS / TRACK XX

CAPACITY XX

NORMAL MODE ☐

ALTERNATE MODE ☐

F I G. 6

START

EXECUTE IRT — 81

READ HDD PARAMETER
FROM HDC — 83

COMPARE READ OUT
PARAMETER WITH CONTENTS
OF CMOS MEMORY — 85

IS
COINCIDENCE
OBTAINED
? — 87

YES → TO DOS ROUTINE

NO

STORE READ OUT HDD
PARAMETER IN MEMORY 7 — 88

DISPLAY CORRECT
PARAMETER OF HDD — 89

SET UP — 91

DISPLAY MESSAGE TO URGE
USER TO DEPRESS SYSTEM
RESET KEY — 93

END

F I G. 7